# EUROPÄISCHE PATENTSCHRIFT

(11) **EP 0 706 811 B1**
(45) Veröffentlichungstag und Bekanntmachung des Hinweises auf die Patenterteilung: **07.01.1999**
(21) Anmeldenummer: 94116258.8
(22) Anmeldetag: 14.10.1994
(51) Int. Cl.: B01D 17/04, B01D 17/025, B01D 61/14, C02F 1/40

(54) **Verfahren zum Abscheiden von Fett und Öl aus tensidhaltigem Abwasser, Abscheideanlage und Einrichtung zum Spalten eines Emulsionsanteils in einer Abscheideanlage**
Process for separating fat and oil from waste water containing tensides, separation installation and device for breaking an emulsion in a separation installation
Procédé pour la séparation de graisses et d'huile à partir d'eaux usées contenant des agents tensio-actifs, installation de séparation et dispositif pour séparer une émulsion dans une installation de séparation

(43) Veröffentlichungstag der Anmeldung: 17.04.1996
(73) Patentinhaber: Zeppelin Silo- und Apparatetechnik GmbH, 88045 Friedrichshafen (DE)
(72) Erfinder:
(74) Vertreter: Grünecker, Kinkeldey, Stockmair & Schwanhäusser Anwaltssozietät

(56) Entgegenhaltungen:
- EP-A- 0 563 646
- DE-A- 2 444 159
- DE-A- 2 546 579
- DE-U- 9 300 595
- GB-A- 2 270 854
- US-A- 5 173 190

## Beschreibung

Die Erfindung betrifft ein Verfahren gemäß Oberbegriff des Anspruchs 1 und eine Abscheideanlage gemäß dem Oberbegriff des Anspruchs 3.

Bei einem aus DE-U-93 00 595 bekannten Verfahren zum Behandeln von Kompressorkondensaten, Kühl-, Schmier- oder Waschemulsionen wird nach dem Abscheiden frei aufschwimmbarer Fette und Öle unter Schwerkrafteinfluß ein Emulsionsanteil in einen Pufferbehälter geleitet und aus diesem über eine Filtrationsmembrane geführt, durch die im Cross-Flow-Verfahren Reinwasser abgespalten wird. Der angereichterte Emulsionsanteil wird nachfolgend wieder direkt in den Abschnitt der Abscheideanlage rückgeführt, in welchem die Schwerkraftabscheidung stattfindet und dem neues, zu behandelndes Abwasser zugeführt wird. Der Kreislauf des über die Membrane geführten Emulsionsanteils enthalt demzufolge den Schwerkraft-Abscheidebereich der Abscheideanlage, den Pufferbehälter und die Membrane, so daß der die Membrane passierende Emulsionsanteil gleich wieder mit der noch nicht filtrierten Emulsion vermischt wird.

Bei einem aus DE-A-24 44 159 bekannten Verfahren zum Aufbereiten von Ölemulsionen wird keine Abscheidung durch Schwerkraft vorgenommen, sondern wird ein Anteil der Emulsion über einen Ultrafilter konzentriert, wobei ein eigener Kreislauf über den Ultrafilter einrichtbar ist, um möglichst viel wiederverwertbares Permeat zu gewinnen. Das Konzentrat wird abgeführt bzw. vernichtet und keiner Schwerkraftabscheidung unterworfen. Zweck des Verfahrens ist es, das die Emulsion mitbildende Wasser abzuspalten und wieder für einen Waschvorgang bereitzustellen.

Bei einem aus DE-A-25 46 579 bekannten Verfahren zum Spalten von Öl-In-Wasser-Emulsionen zirkuliert die gesamte, einem Kreislaufbehälter zugeführte Emulsionsmenge über einen Ultrafilter, d.h. die den Ultrafilter passierende Emulsion geht direkt zurück in den Kreislaufbehälter, der neue und auch noch unbehandelte Emulsion enthält. Parallel zu dem offenen, über den Ultrafilter geführten Kreislauf ist ein eine Entölungseinrichtung enthaltender, ebenfalls offener Kreislauf über den Kreislaufbehälter vorgesehen. Aus der Entölungseinrichtung gelangt ständig neues, ölarmes Wasser zurück in den Kreislaufbehälter, in dem sich neue Emulsion, unbehandelte Emulsion, ölarmes Wasser und der vom Ultrafilter kommende Emulsionsanteil wieder vermischen.

Bei aus "Membrantrennverfahren", Verfasser: Rautenbach, Robert, 1. Auflage 1981, Otto-Salle-Verlag GmbH & Co., Frankfurt am Main, S. 164 bis 167, bekannten Verfahren zur Ultrafiltration von Öl-Wasser-Emulsionen in der metallverarbeitenden Industrie wird für die verwendeten Membranen eine molekulare Trenngrenze von etwa 50.000 beschrieben.

Es ist ferner aus der Praxis bekannt, tensidhaltiges Küchen- oder Kantinenabwasser durch eine Schwerkraft-Abscheideanlage mit strömungsberuhigten Abschnitten zu leiten und einen u. a. wegen der Tenside stabilen Emulsionsanteil des Abwassers mit chemischen Zusatzstoffen wie Säuren und mit Flockungsmitteln zu spalten. Die Zusatzstoffe müssen für den Betrieb der Abscheideanlage zugekauft und mit exakter Dosierung eingesetzt werden. Die Wartung und der Betrieb der Abscheideanlage sind kompliziert und aufwendig, weil stets optimale Parameter für das Spaltverfahren geschaffen und eingehalten werden müssen, und weil auch der Ph-Wert des Abwassers ständig überwacht und korrigiert werden muß. Trotzdem sind die zulässigen Grenzwerte insbesondere von schwerflüssigen lipophilen Stoffen im Reinwasser nicht zuverlässig einzuhalten, leiden Abwasserrohre der Kanalisation und ist funktionsbedingt eine hohe Entsorgungs- und Wartungsfrequenz mit jeweils vollständiger Entleerung und Frischwasserbefüllung der Anlage einzuhalten. Zu entsorgende Abscheidefraktionen sind wegen der chemischen Zusatzstoffe teurer Sondermüll.

Der Erfindung liegt die Aufgabe zugrunde, ein Verfahren der eingangs genannten Art und eine Abscheideanlage zum Durchführen des Verfahrens zu schaffen, die eine bisher in der praktischen Anwendung nicht erreichbare Abscheideleistung bei Küchen- und Kantinenabwasser erzielen lassen, insbesondere im Hinblick auf schwerflüssige lipophile Stoffe (H-17) im einzuleitenden Reinwasser. Dabei soll sich das Verfahren wartungsarm und mit niedrigen Betriebskosten für Küchen und Kantinen einsetzen lassen, die pflanzliche und tierische Öle und Fette verarbeiten und tensidhaltiges Abwasser erzeugen.

Die gestellte Aufgabe wird erfindungsgemäß durch das Verfahren mit den Merkmalen des Anspruchs 1 und die Abscheideanlage mit den Vorrichtungsmerkmalen des Anspruchs 3 gelöst.

Verfahrensgemäß wird ein stabiler Emulsionsanteil des Abwassers abgesondert und im Kreislauf durch Ultrafiltration behandelt, wobei gleichzeitig das normale Schwerkraft-Abscheideverfahren unbehindert weiter abläuft. Das Konzentrieren des Emulsionsanteils wird, um die normale Schwerkraftabscheidung nicht zu stören, lokal getrennt durchgeführt, ehe die aufkonzentrierte Emulsion zur Schwerkraftabscheidung dem strömungsberuhigten Abwasser wieder zugeführt wird. Das Konzentrieren des Emulsionsanteils läßt sich ohne zulaufendes Abwasser durchführen. Der abgesonderte Emulsionsanteil wird auf diese Weise für die nachfolgende erneute Schwerkraftabscheidung von Öl und Fett konzentriert und dabei destabilisiert. Erst bei Erreichen einer vorbestimmten Konzentration der dann destabilisierten Emulsion im Arbeitsbehälter wird diese mittels Fördereinrichtungen in einen Schlammfang- oder Abscheidebehälter rückgeführt, um Fette und Öle abzuscheiden. Erstaunlicherweise werden durch das Zusammenziehen der Schwerkraftabscheidung und der Ultrafiltration des abgesonderten Emulsionsanteils im angegebenen Molekulargewicht-Trenngrenzbereich bisher bei tensidhaltigem Abwasser in der Praxis nicht realisierbare geringfügige Belastungen im Reinwasser erreicht, die geltende Anforderungen bei weitem unterschreiten. Die Betriebskosten sind gering. Der Wartungsbedarf ist normal. Die Abscheidefraktionen sind kein teurer Sondermüll. Die abgeschiedenen Fette und Öle können in der Kosmetik- oder Futtermittelindustrie weiterverarbeitet werden.

In der Abscheideanlage zirkuliert der abgesonderte Emulsionsanteil unter dem Einfluß der Fördereinrichtungen nur zwischen dem Arbeitsbehälter und der Ultrafiltrationsmembrane. Die Betriebskosten und der Wartungsaufwand sind gering, da keine Zusatzstoffe wie Chemikalien der dgl., benötigt werden, und da die Ultrafiltrationsmembrane im Wartungs- oder Reinigungszyklus der Abscheideanlage gewartet oder gereinigt werden kann.

Gemäß Anspruch 2 wird das Reinwasser zumindest zum Teil gesammelt und für zusätzliche Aufgaben, hauptsächlich beim Abscheideverfahren eingesetzt, z.B. zum Spülen von Teilen der Abscheideanlage oder der Komponenten für die Ultrafiltration. Dadurch wird eine Einsparung an Frischwasser erreicht. Das Reinwasser läßt sich aber auch gewinnbringend in dem abwassererzeugenden Betrieb für Vorreinigungs- oder Reinigungsarbeiten einsetzen, weil es dank der Ultrafiltration von hoher Qualität ist.

Gemäß Anspruch 4 wird der Emulsionsanteil durch die Pumpe in den Membranfiltermodul hochgepumpt und nach der Filtration strömt die Emulsion selbsttätig in den Arbeitsbehälter zurück.

Gemäß Anspruch 5 läßt sich die Leistungsfähigkeit der Abscheideanlage universell an die jeweiligen Anforderungen anpassen. Ein nicht angeschlossener Membranfiltermodul kann gespült werden, während ein weiterer oder die weiteren arbeiten.

Gemäß Anspruch 6 steht vom anfallenden Reinwasserjeweils ein bestimmter Anteil für zusätzliche Aufgaben zur Verfügung, z.B. gemäß Anspruch 7 zum Spülen der Abscheideanlage nach der oder während der Entsorgung, oder gemäß Anspruch 8 zum Spülen des oder der Membranfiltermodule.

Gemäß Anspruch 9 läßt sich die Leistungsfähigkeit der Abscheideanlage mit einer Anlagen-Heizvorrichtung beeinflussen. Die Heizvorrichtung ist ferner zweckmäßig, um bei der Entsorgung eine komplette Entleerung problemlos durchführen zu können.

Gemäß Anspruch 10 läßt sich für die jeweilige Anforderung eine passende Abscheideanlage kostengünstig zusammensetzen.

Gemäß Anspruch 11 lassen sich durch die Materialauswahl und die Oberflächenbehandlung der Behälter eine lange Standzeit der Abscheideanlage, eine leichte Entsorgung und ein wirksamer Schutz gegen Korrosion erreichen.

Gemäß Anspruch 12 ist der Membranfiltermodul baulich einfach, leicht zu reinigen und zu warten und kostengünstig herstellbar. Ultrafiltrationsmembranen, die in verschiedenen Formen handelsüblich sind, lassen sich einsetzen.

Gemäß Anspruch 13 wird einem Rohrbündel aus geraden Rohrabschnitten aus Herstellungs- und Kostengründen der Vorzug zu geben sein.

Gemäß Anspruch 14 ergibt sich bei kleinem Bauraum des Membranfiltermoduls hohe Leistungsfähigkeit. Der gewählte Rohrdurchmesser gewährleistet ausreichende Stabilität und Druckfestigkeit und eine optimale Relation zwischen dem Platzbedarf im Durchlaufbehälter, der nutzbaren Filtrationsfläche und dem nutzbaren Sammelquerschnitt für Reinwasser. Es sorgt insbesondere eine leistungsgesteigerte Ultrafiltrationsmembaren aus Kunststoff für eine über relativ lange Standzeiten nahezu gleichbleibende Abscheideleistung, wobei aufgrund des angegebenen Molekulargewicht-Trenngrenzbereichs ein ausreichender starker Reinwasser-Durchsatz erzielt wird, das die unerwartet geringe Konzentration insbesondere schwerflüchtiger lipophiler Stoffe enthält und für die Umwelt und das Kanalisationssystem weitgehend unschädlich ist. Für Kantinen- und Küchenabwasser mit Tensidanteilen ist die Ultrafiltrationsmembrane zweckmäßig auf einen Molekulargewicht-Trenngrenzbereich um 5 X 10⁴ ausgelegt.

Anhand der Zeichnung wird das erfindungsgemäße Verfahren bei einer Abscheideanlage erläutert und auf eine Einrichtung gemäß der Erfindung hingewiesen. Es zeigen:
- Fig. 1: ein Blockschaltbild einer Abscheideanlage,
- Fig. 2: einen Längsschnitt einer Einrichtung zum Spalten eines Emulsionsanteils von Abwasser, wobei die Einrichtung der in Fig. 1 schematisch angedeuteten entsprechen kann und in ihrem Innenaufbau verdeutlicht ist,
- Fig. 3: eine Stirnansicht zu Fig. 2, und
- Fig. 4: eine Detailschnittansicht zu Fig. 2.

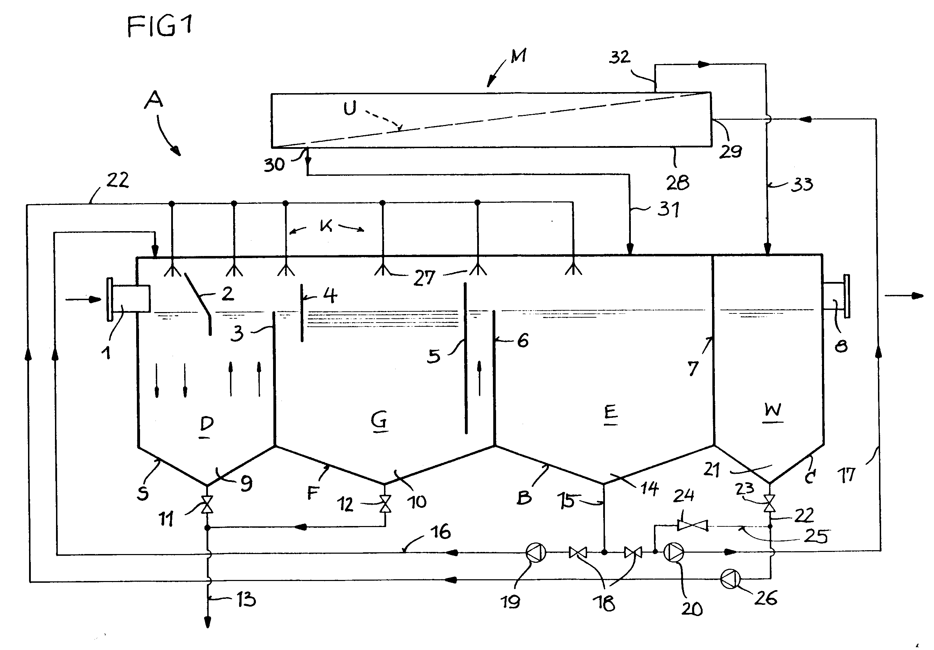

Eine Abscheideanlage A gemäß Fig. 1 dient zur Behandlung tensidhaltigen Abwassers aus einem tierische Fette und Öle verarbeitenden Betrieb, wie einer Küche oder einer Kantine. Die Abscheideanlage A ist baukastenartig aus einem kompakten Behälterblock S, F, B und C, einem Pumpenblock oder einer Fördereinrichtung H und einer Einrichtung zum Spalten eines Emulsionsanteils des Abwassers, insbesondere wenigstens einem Membranfiltermodul M, zusammengesetzt. Im Behälterblock könnten die Behälter S und/oder C auch weggelassen werden. Ferner könnte der Behälterblock aus einzelnen Behältern zusammengesetzt sein, die über in Fig. 1 nicht angedeutete Überström- oder Verbindungsleitungen miteinander verbunden, aber baulich voneinander getrennt sind.

Ein Schlammfang-Behälter S zum Abscheiden von Sinkstoffen ist an einen Zulauf 1 für Abwasser angeschlossen. Eine Prallwand 2 im Schlammfangbehälter S sorgt für Strömungsberuhigung im Fette und Öle, Sinkstoffe und dgl. enthaltenden Abwasser D. Die Unterseite des Behälters S bildet einen Sumpf 9. Ein Überlauf 3 trennt den Behälter S vom in Strömungsrichtung dahinterliegenden Abscheidebehälter F und bestimmt die Höhe des Flüssigkeitsspiegels im Behälter S. In Strömungsrichtung hinter dem Überlauf 3 ist eine Tauchwand 4 angeordnet, die die Strömungsberuhigungszone von der Überlaufzone trennt. Im Behälter F ist ein Sumpf 10 gebildet. An den Behälter F schließt sich in Strömungsrichtung der Behälter B an, der eine Arbeitskammer definiert und durch einen Überlauf 6 in etwa auf der Höhe des Überlaufs 3 vom Behälter F getrennt ist. Vor dem Überlauf 6 ist eine oberhalb des Flüssigkeitsspiegels beginnende und sich bis in die Nähe des Sumpfes 10 erstreckende Tauchwand 5 vorgesehen. Zwischen den Tauchwänden 4 und 5 bilden aufschwimmende Fette und Öle eine sich allmählich verfestigende Schicht, die auf herkömmliche Weise durch Absaugen entsorgt oder permanent durch Ablaufen oder Herausdrücken entsorgt werden kann. Im Behälter F ist der Sinkstoffe entledigtes Abwasser G enthalten. In der Arbeitskammer B ist hingegen eine abgesonderte Charge eines Emulsionsanteils E des Abwassers enthalten. Die Arbeitskammer B ist durch eine Trennwand 7 vom Behälter C getrennt, der zum Sammeln von Reinwasser W bestimmmt und an den Ablauf 8 angeschlossen ist. Der Behälter C besitzt einen Bodenbereich 21.

In den Behältern S, F, B können Spülelemente 27 angeordnet sein, die Teil eines Spülsystems K sind, das über eine Pumpe 26 mit Reinwasser W aus dem Behälter C (abgezogen über eine Leitung 22 mit einem Ventil 23) versorgt wird. Eine Leitung 13 ist über Ventile 11, 12 an den Sumpf 9 bzw. 10 der Behälter S, F angeschlossen und ermöglicht das Entleeren der Behälter bzw. das Abziehen von Sinkstoffen, z.B. zur Entsorgung.

An einen Sumpf 14 des Behälters B ist eine Leitung 15 angeschlossen, die über Ventile 18 wahlweise mit einer Leitung 16 oder 17 verbindbar ist. Die Leitung 16 ist an den Behälter S (oder auch an den Behälter F) angeschlossen und enthält eine Pumpe 19. Die Leitung 17 führt zu einem Einlaß 29 eines Durchlaufbehälters 28 des Membranfiltermoduls M. In der Leitung 17 ist eine Pumpe 20 angeordnet. Von der Leitung 22 aus dem Behälter C zweigt eine Leitung 25 mit einem Ventil 24 zur Saugseite der Pumpe 20 ab. Von einem Auslaß 30 des Durchlaufgehäuses 28 führt eine Leitung 31 zum Behälter B. Schließlich ist ein Reinwasser-Auslaß 32 des Membranfiltermoduls M über eine Leitung 33 mit dem Behälter C verbunden. Im Membranfiltermodul M ist eine Ultrafiltrationsmembrane U enthalten, die den Strömungsweg vom Einlaß 29 zum Auslaß 30 vom Strömungsweg zum Reinwasserauslaß 32 trennt.

Anstelle nur eines Membranfiltermoduls M können mehrere gemeinsam oder individuell zuschalt- und abschaltbare Module M vorgesehen sein. Die Leitung 33 könnte auch direkt zum Ablauf 8 führen. Ferner könnten mehrere Behälter B zueinander parallel vorgesehen und an jeweils einen oder mehrere Membranfiltermodule angeschlossen sein.

Im Abscheidebetrieb strömt Abwasser durch den Zulauf 1 ein. Im Behälter S werden Sinkstoffe abgeschieden, ehe das Abwasser mit Fett- und Ölpartikeln und dem stabilen Emulsionsantreil E in den Behälter F eintritt. Zwischen den Tauchwänden 4, 5 steigen ausscheidbare Fett- und Ölpartikel nach oben. Der Emulsionsanteil E tritt über den Überlauf 6 in die Arbeitskammer B. Das linke Ventil 18 ist geschlossen. Das rechte Ventil 18 ist geöffnet. Das Ventil 24 ist ebenfalls geschlossen. Die Pumpe 20 läuft und fördert den Emulsionsanteil E über die Leitung 17 in den Membranfiltermodul M, in dem Reinwasser durch die Ultrafiltrationsmembrane U abgesondert und über die Leitung 33 in den Behälter C geführt wird.

Im Durchlaufbehälter 28 entsteht allmählich eine instabile Emulsion, die über die Leitung 31 in den Arbeitsbehälter B zurückströmt, so daß dort allmählich eine Aufkonzentration der instabilen Emulsion stattfindet, bis z.B. bis 60 Volumenanteile instabiler Emulsion oben und etwa 40 Volumenanteile Wasser unten vorliegen. Dabei kann durchaus ständig Abwasser aus dem Behälter F in die Arbeitskammer B nachlaufen. Bei ausreichender Aufkonzentration in der Arbeitskammer B wird die Pumpe 20 gestoppt und das rechte Ventil 18 geschlossen. Das linke Ventil 18 wird geöffnet und mit der Pumpe 19 wird über die Leitung 16 die aufkonzentrierte instabile Emulsion aus der Arbeitskammer B in den Behälter S zurückgepumpt. Die zurückgepumpten Fette und Öle treten über den Überlauf 3 in den Behälter F ein und werden dort durch Aufschwimmen oben abgesondert. Das Reinwasser im Behälter C wird gesammelt, ein überschüssiger Anteil strömt über den Ablauf 8 in die Kanalisation. Gegebenenfalls wird beim Zurückpumpen der instabilen Emulsion gleichzeitig mittels Reinwasser aus dem Behälter C das Membranfiltermodul M rückgespült.

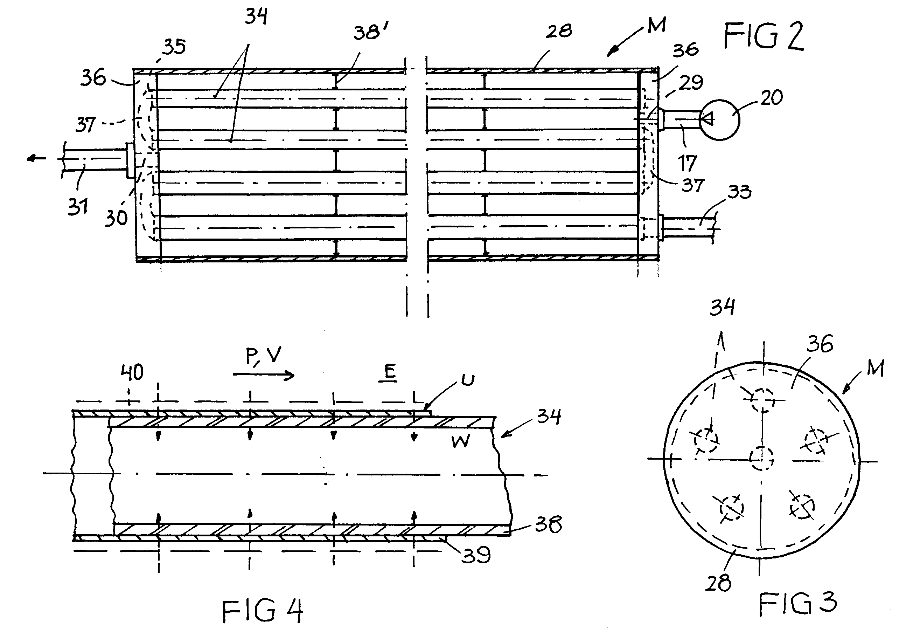

Die Einrichtung zum Spalten des Emulsionsanteils E weist gemäß Fig. 2 und 3 wenigstens den einen Membranfiltermodul M auf, der beispielsweise als Außenrohr in Form des kreisförmigen oder viereckigen Durchlaufgehäuses 28 ausgebildet und durch Endplatten 36 verschlossen ist. Innen sind, z.B., sechs gerade Rohrabschnitte 34 annähernd gleichförmig verteilt und zur Längsachse des Durchlaufgehäuses 28 parallel ausgerichtet. Sie werden gegebenenfalls durch Distanzelemente 38' lagegesichert. Die Einbaulage des Moduls M ist beliebig, zweckmäßigerweise wird er mit vertikaler Längsachse aufgestellt. Die äußeren Oberflächen der Rohrabschnitte 34 tragen Ultrafiltrationsmembranen U. Die Rohrabschnitte 34 greifen mit ihren Enden 35 in die Endplatten 36 ein, sind durch Querkanäle 37 in Strömungsverbindung und an die eine Leitung 33 angeschlossen. Die Ein- und Auslässe 29, 30, die an die Leitungen 31, 17 angeschlossen sind, können gemäß Fig. 2 in den Endplatten 36 oder auch direkt in dem Durchlaufgehäuse oder Außenrohr 28 vorgesehen sein. Die Ultrafiltrationsmembrane U ist als gleichförmige, extreme dünne Schicht 39 auf rohrförmiges Trägermaterial 38 aufgebracht, das dem Rohrabschnitt 34 die notwendige Gestaltund Druckfestigkeit verleiht. Das Trägermaterial 38 ist für Reinwasser durchlässig, das innen gesammelt und abgeleitet wird. Im Betrieb strömt der Emulsionsanteil E mit einer vorbestimmten Strömungsgeschwindigkeit V und einem vorbestimmten Strömungsdruck durch das im Durchlaufgehäuse 28. Das Reinwasser passiert die Ultrafiltrationsmembrane U, während Fette und Öle am Durchgang gehindert und abgefördert werden. Es baut sich zwar (Fig. 4) außen eine zusätzliche Schicht 40 aus abgelagerten Öl- bzw. Fettpartikeln auf, die den Filtrationseffekt der Membrane beeinflußt, jedoch wächst diese Schicht 40 nur bis zu einer vorbestimmten Dicke, die sich durch die Strömungsgeschwindigkeit, den Druck und gegebenenfalls die Temperatur des Emulsionsanteils steuern läßt.

Zweckmäßigerweise handelt es sich bei den Rohrabschnitten 34 um Einzollrohre. Anstelle eines Rohrbündels könnte auch eine Rohrschlange mit endseitigen Rohrbögen verwendet werden.

## Patentansprüche

1. Verfahren zum Abscheiden von Fett und Öl aus tensidhaltigem Abwasser, insbesondere Küchen- oder Kantinen-Abwasser, in einer Abscheideanlage, bei dem aus dem Abwasser zur Bildung einleitfähigen Reinwassers aufschwimmfähige Fette und Öle unter Schwerkrafteinfluß direkt durch Strömungsberuhigung zum Aufschwimmen gebracht und abgeschieden werden, wobei zusätzlich aus dem Abwasser ein aufschwimmfähiger Fette und Öle entledigter Emulsionsanteil im Cross-Flow-Verfahren unter Aufkonzentrieren membranfiltriert und nachfolgend dem Abwasser in der Abscheideanlage wieder zugeführt wird, **dadurch gekennzeichnet**, daß der Emulsionsanteil als eine Charge vom Abwasser abgesondert und im Kreislauf durch Membranfiltrierung im Ultrafiltrationsbereich mit einer Molekulargewicht-Trenngrenze zwischen 5x10⁴ und 1,5x10⁵ destabilisiert und nachfolgend zur erneuten Schwerkraftabscheidung von Fett und Öl dem Abwasser wieder zugeführt wird.

2. Verfahren nach Anspruch 1, **dadurch gekennzeichnet**, daß das bei der Ultra-Membranfiltrierung gewonnene Reinwasser zu Spülzwecken gesammelt wird.

3. Abscheideanlage zum Abscheiden von Fett und Öl aus tensidhaltigem Abwasser, insbesondere Küchen- oder Kantinenabwasser, mit einem zulaufseitigen Sammelbehälter (S), wenigstens einem dem Sammelbehälter (S) über einen Überlauf nachgeordneten Fett- und Ölabscheidebehälter (F), einer wenigstens eine Cross-Flow Membrane (U) aufweisenden Einrichtung (M) zum Spalten eines Emulsionsanteils (E) des Abwassers, einem Ablauf (8) für Reinwasser (W), und mit Fördereinrichtungen (19, 20) zumindest für den Emulsionsanteil (E), die mit steuerbarer Fördergeschwindigkeit und vorbestimmbarem Förderdruck betreibbar sind, **dadurch gekennzeichne**t, daß stromab des Abscheidebehälters (F) wenigstens ein Arbeitsbehälter (B) zum Absondern des Emulsionsanteils (E) vorgesehen ist, der vom Abscheidebehälter (F) durch eine oberhalb des Flüssigkeitsspiegels beginnende und sich bis in Bodennähe erstreckende Tauchwand (5) im Abscheidebehälter (F) und eine stromab der Tauchwand (5) angeordnete Überlaufschwelle (6) getrennt oder baulich vom Abscheidebehälter (F) getrennt und mit diesem über Verbindungsleitungen verbunden ist, daß der Arbeitsbehälter (B) wahlweise entweder mit einem Einlaß (29) und einem Auslaß (30) eines die Membrane (U) enthaltenden Membranfiltermoduls (M) oder mit dem Sammel- oder dem Abscheidebehälter (S, F) verbindbar ist, und daß die Membrane (U) wenigstens eine im Ultrafiltrationsbereich mit einem Molekulargewicht-Trenngrenzbereich zwischen ca. 5 x 10⁴ und 1,5 x 10⁵ arbeitende, auf einem permeablen rohrförmigen Trägermaterial (38) angeordnete Ultra-Filtrationsmembrane aus Kunststoff ist.

4. Abscheideanlage nach Anspruch 3, **dadurch gekennzeichnet**, daß der Membranfiltermodul (M) oberhalb des Flüssigkeitsspiegels des Arbeitsbehälters (B) angeordnet ist, und daß zwischen dem Arbeitsbehälter (B) und dem Einlaß (29) des Membranfiltermoduls (M) wenigstens eine Pumpe (20) vorgesehen ist.

5. Abscheideanlage nach Anspruch 3, **dadurch gekennzeichnet**, daß dem Arbeitsbehälter (B) mehrere, vorzugsweise individuell an den Arbeitsbehälter (B) anschließbare, Cross-Flow-Membranfiltermodule (M) zugeordnet sind.

6. Abscheideanlage nach Anspruch 3, **dadurch gekennzeichnet**, daß wenigstens ein von den Behältern (S, F, B) getrennter Reinwasser-Sammelbehälter (C) vorgesehen ist, in dem, vorzugsweise, der Ablauf (8) zum Ausleiten des Reinwassers angeordnet ist.

7. Abscheideanlage nach Anspruch 6, **dadurch gekennzeichnet**, daß der Reinwasser-Sammelbehälter (C) wahlweise an ein Spülsystem (K) mit Spülelementen (27) im als Schlammfangbehälter ausgebildeten Sammelbehälter (S), im Abscheidebehälter (F) und/oder im Arbeitsbehälter (B) anschließbar ist.

8. Abscheideanlage nach wenigstens einem der Ansprüche 6 bis 7, **dadurch gekennzeichnet**, daß der Reinwasser-Sammelbehälter (C) wahlweise an einen Spüleinlaß (29) des Membranfiltermoduls (M) anschließbar ist.

9. Abscheideanlage nach wenigstens einem der Ansprüche 3 bis 8, **dadurch gekennzeichnet**, daß eine Anlagen-Heizvorrichtung vorgesehen ist.

10. Abscheideanlage nach wenigstens einem der Ansprüche 3 bis 9, **dadurch gekennzeichnet**, daß die Abscheideanlage (A) baukastenartig aus einem Behälterblock (F, S, B, C), einem Pumpenaggregat und aus wenigstens einem Membranfiltermodul (M) zusammengesetzt ist.

11. Abscheideanlage nach wenigstens einem der Ansprüche 3 bis 10, **dadurch gekennzeichnet**, daß zumindest die Behälter (F, S, B, C) aus einem Edelstahl, z.B. der Typspezifikation 1.4571 oder 1.4406, bestehen und innenseitig elektropoliert oder teflonbeschichtet sind.

12. Abscheideanlage nach Anspruch 3, **dadurch gekennzeichnet**, daß der Membranfiltermodul (M) einen Durchlaufbehälter (26) aufweist, in den wenigstens ein permeables Rohr (34), vorzugsweise ein Rohrbündel, eingesetzt ist, dessen die Ultrafiltrationsmembrane (U) tragende Rohrwand (38) das Innere des Rohrs (34) vom Innenraum des Durchlaufbehälters (28) trennt.

13. Abscheideanlage nach Anspruch 12, **dadurch gekennzeichnet**, daß der Durchlaufbehälter (28) ein langgestrecktes Außenrohr mit beidendigen Stirnplatten (36) und wenigstens einen Einlaß und einen Auslaß (29, 30) aufweist, daß in Längsrichtung des Außenrohres in diesem ein Rohrbündel aus voneinander beabstandeten, im wesentlichen geraden und zueinander parallelen Membranfilter-Rohrabschnitten (34) untergebracht ist, die in den Endplatten (36) miteinander kommunizieren, und daß der Reinwasserauslaß (32) mit den Innenräumen der Rohrabschnitte (34) verbunden ist.

14. Abscheideanlage nach wenigstens einem der Ansprüche 12 oder 13, **dadurch gekennzeichnet**, daß jeder Membranfiltermodul (M) in seinem Durchlaufbehälter sechs ca. 6 m lange 25 mm ND (1-Zoll)-Membran-Rohrabschnitte (34) enthält.

## Claims

1. A process for separating fat and oil from tenside-containing waste water, in particular waste water from kitchens or canteens, in a separation plant, in which fats and oils capable of rising are floated out of the waste water under the action of gravity directly by calming the flow so as to form conveyable clean water and are separated, wherein an emulsion portion freed from fats and oils and capable of rising is additionally filtered out of the waste water by a membrane in a cross-flow process with concentration and is subsequently returned to the waste water again in the separation plant, **characterized in that** the emulsion portion is separated from the waste water as a charge and is de-stabilized in the circuit by membrane filtration in the ultrafiltration range with a molecular-weight separation boundary of between 5 × 10⁴ and 1·5 × 10⁵ and is subsequently returned to the waste water again for the renewed gravity separation of fat and oil.

2. A process according to Claim 1, **characterized in that** the clean water recovered during the membrane ultrafiltration is collected for rinsing purposes.

3. A separation plant for separating fat and oil from tenside-containing waste water, in particular waste water from kitchens or canteens, with a collecting tank (**S**) on the inflow side, at least one fat- and oil-separating tank (**F**) arranged downstream of the collecting tank (**S**) by way of an overflow, a device (**M**) comprising at least one cross-flow membrane (**U**) for splitting an emulsion portion (**E**) of the waste water, an outlet (8) for clean water (**W**), and with conveying devices (19, 20) at least for the emulsion portion (**E**), which devices (19, 20) can be driven at a controllable conveying speed and a predeterminable conveying pressure, **characterized in that** at least one working tank (**B**) for separating the emulsion portion (**E**) is provided downstream of the separating tank (**F**), and is separated from the separating tank (**F**) by a baffle (5) - starting above the level of the liquid and extending as far as the vicinity of the base - in the separating tank (**F**) and an overflow threshold (6) arranged downstream of the baffle (5) or is separated structurally from the separating tank (**F**) and is connected thereto by way of connecting lines, the working tank (**B**) can be optionally connected either to an inlet (29) and an outlet (30) of a membrane-filter module (**M**) containing the membrane (**U**) or to the collecting tank or the separating tank (**S**, **F**), and the membrane (**U**) is at least one ultrafiltration membrane of plastics material operating in the ultrafiltration range with a molecular-weight separation boundary of between 5 × 10⁴ and 1·5 x 10⁵ and situated on a permeable tubular base material (38).

4. A separation plant according to Claim 3, **characterized in that** the membrane-filter module (**M**) is arranged above the level of the liquid of the working tank (**B**), and at least one pump (20) is provided between the working tank (**B**) and the inlet (29) of the membrane-filter module (**M**).

5. A separation plant according to Claim 3, **characterized in that** a plurality of cross-flow membrane-filter modules (**M**), which can preferably be individually attached to the working tank (**B**), are associated with the working tank (**B**).

6. A separation plant according to Claim 3, **characterized in that** at least one clean-water collecting tank (**C**) is provided, which is separate from the tanks (**S**, **F**, **B**) and in which the outlet (8) for removing the clean water is preferably situated.

7. A separation plant according to Claim 6, **characterized in that** the clean-water collecting tank (**C**) can optionally be attached to a rinsing system (**K**) with rinsing elements (27) in the collecting tank (**S**) constructed as a silt-collecting tank, in the separating tank (**F**) and/or in the working tank (**B**).

8. A separation plant according to at least one of Claims 6 to 7 , **characterized in that** the clean-water collecting tank (**C**) can optionally be attached to a rinsing inlet (29) of the membrane-filter module (**M**).

9. A separation plant according to at least one of Claims 3 to 8, **characterized in that** a heating device for the plant is provided.

10. A separation plant according to at least one of Claims 3 to 9, **characterized in that** the separation plant (**A**) is constructed in the manner of a module from a tank block (**F**, **S**, **B**, **C**), a pump unit and at least one membrane-filter module (**M**).

11. A separation plant according to at least one of Claims 3 to 10, **characterized in that** at least the tanks (**F**, **S**, **B**, **C**) consist of a special steel, for example of the type specification 1.4571 or 1.4406, and are electrolytically polished or Teflon-coated on the inside.

12. A separation plant according to Claim 3, **characterized in that** the membrane-filter module (**M**) has a throughflow tank (28) in which is inserted at least one permeable pipe (34), preferably a bundle of pipes, of which the pipe wall (38) carrying the ultrafiltration membrane (**U**) separates the interior of the pipe (34) from the interior of the throughflow tank (28).

13. A separation plant according to Claim 12, **characterized in that** the throughflow tank (28) comprises an elongate outer pipe with end plates (36) at both ends and at least one inlet and one outlet (29, 30), a bundle of pipes comprising mutually spaced, substantially straight and mutually parallel membrane-filter pipe sections (34) is arranged in the outer pipe in the longitudinal direction thereof, the said membrane-filter pipe sections (34) communicating with one another in the end plates (36), and the clean-water outlet (32) is connected to the interiors of the pipe sections (34).

14. A separation plant according to at least one of Claims 12 [and] 13, **characterized in that** each membrane-filter module (**M**) is provided in its throughflow tank with six 25 mm ND [?nominal-diameter] (1-inch) membrane pipe sections (34) approximately 6 m long.

## Revendications

1. Procédé de séparation de graisse et d'huile contenues dans des eaux usées tensioactives, en particulier des eaux usées de cuisines ou de cantines dans une installation de séparation, procédé dans lequel, pour former de l'eau épurée susceptible d'être déversée, à partir des eaux usées, les graisses et les huiles pouvant surnager sont amenées à flotter, sous l'influence de la force de gravité, directement par stabilisation du courant et sont séparées, une fraction d'émulsion, débarrassée des graisses et des huiles pouvant surnager, étant en supplément extraite des eaux usées par filtrage sur une membrane, par le procédé dit "cross-flow", avec concentration, et étant ensuite renvoyée aux eaux usées dans l'installation de séparation, caractérisé en ce que la fraction d'émulsion est séparée des eaux usées sous la forme d'une charge et est déstabilisée dans le circuit, par filtration sur membrane dans le domaine de l'ultrafiltration, avec une limite de séparation de poids moléculaire comprise entre 5 x 10⁴ et 1,5 x 10⁵,et est ensuite renvoyée pour une nouvelle séparation par gravité de la graisse et de l'huile contenues dans les eaux usées.

2. Procédé selon la revendication 1, caractérisé en ce que l'eau épurée obtenue par ultrafiltration sur membrane, est recueillie à des fins de lavage.

3. Installation de séparation de graisse et d'huile contenues dans des eaux usées tensioactives, en particulier des eaux usées de cuisines ou de cantines, comprenant un collecteur (S) côté arrivée, au moins un récipient (F) de séparation de la graisse et de l'huile faisant suite au collecteur (S) par un trop-plein, un dispositif (M) comportant au moins une membrane "cross-flow" (U) pour séparer une fraction d'émulsion (E) des eaux usées, une sortie (8) pour l'eau épurée (W), et comprenant des dispositifs de transport (19, 20) au moins pour la fraction d'émulsion (E), qui peuvent fonctionner à une vitesse de transport commandable et sous une pression de transport pré-déterminable, caractérisée en ce qu'en aval du récipient de séparation (F) est prévu au moins un récipient de travail (B) pour la séparation de la fraction d'émulsion (E), qui est séparé du récipient de séparation (F) par une paroi immergée (5), commençant au-dessus du niveau du liquide et s'étendant jusqu'à proximité du fond, dans le récipient de séparation (F) et par un seuil de trop-plein (6) disposé en aval de la paroi immergée (5), ou qui est séparé de par sa construction du récipient de séparation (F) et est relié à celui-ci par des conduites de liaison, en ce que le récipient de travail (B) peut être relié en option soit à une entrée (29) et à une sortie (30) d'un module de filtre à membrane (M), contenant la membrane (U), soit au collecteur (S) ou au récipient de séparation (F), et en ce que la membrane (U) est au moins une membrane d'ultrafiltration en matière plastique, qui fonctionne dans le domaine d'ultrafiltration, avec une limite de séparation de poids moléculaire comprise entre environ 5 x 10⁴ et 1,5 x 10⁵, et qui est disposée sur un matériau de support (38) tubulaire perméable.

4. Installation de séparation selon la revendication 3, caractérisée en ce que le module de filtre à membrane (M) est disposé au-dessus du niveau du liquide du récipient de travail (B), et en ce qu'entre le récipient de travail (B) et l'entrée (29) du module de filtre à membrane (M) est prévue au moins une pompe (20).

5. Installation de séparation selon la revendication 3, caractérisée en ce qu'au récipient de travail (B) sont associés plusieurs modules de filtres à membrane "cross-flow" (M), pouvant être raccordés de préférence individuellement au récipient de travail (B).

6. Installation de séparation selon la revendication 3, caractérisée en ce qu'il est prévu au moins un collecteur d'eau épurée (C) séparé des récipients (S, F, B), dans lequel est disposée de préférence la sortie (8) pour l'évacuation de l'eau épurée.

7. Installation de séparation selon la revendication 6, caractérisée en ce que le collecteur d'eau épurée (C) peut être raccordé en option à un système de lavage (K) avec éléments de lavage (27) dans le collecteur (S), conformé en récipient de dépôt de boue, dans le récipient de séparation (F) et/ou dans le récipient de travail (B).

8. Installation de séparation selon au moins l'une des revendications 6 et 7, caractérisée en ce que le collecteur d'eau épurée (C) peut être raccordé en option à une entrée de lavage (29) du module de filtre à membrane (M).

9. Installation de séparation selon l'une au moins des revendications 3 à 8, caractérisée en ce qu'il est prévu un dispositif de chauffage des installations.

10. Installation de séparation selon l'une au moins des revendications 3 à 9, caractérisée en ce que l'installation de séparation (A) est composée de manière modulaire d'un bloc de récipients (F, S, B, C), d'un groupe de pompage et d'au moins un module de filtre à membrane (M).

11. Installation de séparation selon l'une au moins des revendications 3 à 10, caractérisée en ce qu'au moins les récipients (F, S, B, C) sont faits d'un acier spécial, par exemple de type 1.4571 ou 1.4406 et sont polis électriquement ou recouverts de Téflon sur leurs surfaces intérieures.

12. Installation de séparation selon la revendications 3, caractérisée en ce que le module de filtre à membrane (M) comporte un récipient de passage (28), dans lequel est introduit au moins un tube (34) perméable, de préférence un faisceau de tubes dont la paroi tubulaire (38), portant la membrane d'ultrafiltration (U), sépare l'intérieur du tube (34) du volume intérieur du récipient de passage (28).

13. Installation de séparation selon la revendication 12, caractérisée en ce que le récipient de passage (28) comporte un tube extérieur allongé avec des plaques frontales (36) aux deux extrémités et au moins une entrée et une sortie (29, 30), en ce que dans la direction longitudinale du tube extérieur est logé dans celui-ci un faisceau de tubes constitué de portions de tube à filtre à membrane (34) espacées les unes des autres, sensiblement rectilignes et parallèles entre elles, qui communiquent entre elles dans les plaques d'extrémités (36), et en ce que la sortie d'eau épurée (32) est reliée aux volumes intérieurs des portions de tube (34).

14. Installation de séparation selon l'une au moins des revendications 12 et 13, caractérisée en ce que chaque module de filtre à membrane (M) contient dans son récipient de passage six portions de tube à membrane (34) de diamètre nominal 25 millimètres (1 pouce) et d'environ six mètres de longueur.
